# EUROPÄISCHE PATENTSCHRIFT

(11) **EP 0 671 361 B1**
(45) Veröffentlichungstag und Bekanntmachung des Hinweises auf die Patenterteilung: **02.05.1997**
(21) Anmeldenummer: 95102757.2
(22) Anmeldetag: 27.02.1995
(51) Int. Cl.: C01D 5/16, C08G 65/30

(54) **Verfahren zur Gewinnung von reinen, fliessfähigen Alkali- oder Erdalkalisalzen aus den Salzrückständen der Polyetherpolyolproduktion**
Process for production of pure free-flowing alkali or alkaline earth salts from residual salts from the production of polyether polyols
Procédé de production de sels alcalins ou alcalino-terreux purs à écoulement sans sels de rejets provenant de la production de polyéther polyols

(30) Priorität: 10.03.1994 DE 4408004
(43) Veröffentlichungstag der Anmeldung: 13.09.1995
(73) Patentinhaber: BAYER AG, 51368 Leverkusen (DE)
(72) Erfinder: Wiegreffe, Philip, Dr., Monaca, PA 15061 (US); Betz, Werner, Dr., D-51519 Odenthal (DE); Rosenbaum, Heinz Jörg, Dr., D-47802 Krefeld (DE)

(56) Entgegenhaltungen:
- EP-A- 0 050 181
- EP-A- 0 387 576
- US-A- 4 137 396
- US-A- 4 535 189

## Beschreibung

Die vorliegende Erfindung betrifft ein Verfahren zur Gewinnung von reinen, fließfähigen Alkali- oder Erdalkalisalzen aus den bei der Polyetherpolyolherstellung durch Neutralisation des alkalischen Polyetherpolyol-Reaktionsgemisches mit anorganischen Säuren als Rückstand anfallenden salzhaltigen Filterkuchen.

Polyetherpolyole haben zahlreiche Einsatzgebiete. Unter anderem finden sie Anwendung als Schmierstoffe, Tenside, Emulsionsbrecher, besonders aber bei der Herstellung von Polyurethanen. Polyurethane werden beispielsweise in Form von Hart- und Weichschaumstoffen, Elastomeren, Beschichtungen und Klebstoffen angewandt. Die Herstellung von Polyetherpolyolen erfolgt großtechnisch durch Alkoxylierungsreaktion von sogenannten Starterverbindungen, welche aktive Wasserstoffatome aufweisen, wie z.B. Alkohole, Phenole oder Amine, mit Epoxiden. Die Alkoxylierungsreaktion wird durch Zugabe alkalischer Katalysatoren wie z.B. Alkali- oder Erdalkalihydroxiden beschleunigt. Diese Basen bewirken die Umsetzung einiger Hydroxyl-Endgruppen zu Alkoholat-Endgruppen, welche schneller unter Ringöffnung mit Epoxiden reagieren und zum Aufbau eines hochmolekularen Polymeren führen. Anschließend werden zur weiteren Polyaddition die Alkoholat-Endgruppen durch Zugabe von Wasser wieder zu Hydroxyl-Endgruppen umgesetzt. Es entstehen üblicherweise Polyole mit mittleren Molekulargewichten zwischen 200 und 10 000 (Ullmanns Encyklopädie der technischen Chemie, englischsprachige Ausgabe, 1992, Band A 21, Seite 670-671).

Verschiedene Verfahren zur Trennung des alkalischen Polyetherpolyol-Reaktionsgemisches sind beschrieben. DE-OS 2 208 614 (US-PS 3 833 669) und US-PS 4 137 396 erläutern z.B. die Benutzung von anorganischen Adsorptionsmitteln zur Entfernung von Kaliumhydroxid. Dieses Verfahren führt zu einer relativ geringen Ausbeute an Polyetherpolyolen. Darüber hinaus ist der anfallende Filterkuchen schwer zu handhaben und zu entsorgen. Ein weiteres Trennverfahren der Polyetherpolyole von der basischen, wäßrigen Katalysatorlösung ist die Phasentrennung mittels Koaleszenz oder Zentrifugieren nach Zugabe von organischen Lösungsmitteln wie in US-PS 3 715 402 beschrieben. Dieses Verfahren kann jedoch nur für wasserunlösliche Polyetherpolyole angewandt werden und führt zu schwankenden Basengehalten im Produkt.

Das allgemein übliche und weit verbreitete Trennverfahren beinhaltet einen Filtrationsschritt. Die Neutralisation des alkalischen Polyether-Reaktionsgemisches erfolgt durch Zusatz von Säuren, wie z.B. Schwefelsäure, Phosphorsäure oder Einleiten von Kohlendioxid. Das Wasser wird dann destillativ entfernt. Die durch Neutralisation entstandenen Alkali- oder Erdalkalisalze können, bedingt durch ihre Unlöslichkeit in Polyolen, abfiltriert werden (US-PS 3 000 963, US-PS 3 833 669 und EP-A 0 387 576). Der so erhaltene Filterkuchen besteht aber nicht nur aus Salzen, sondern enthält nicht unbedeutende Mengen Polyetherpolyol und gegebenenfalls organische Lösungsmittel, was eine Wiederverwertung in dieser Form ausschließt. In US-PS 4 535 189 wird ein Verfahren beschrieben, bei dem das nach dem allgemein üblichen Filtrationsschritt verbleibende Polyetherpolyol aus dem Alkali- oder Erdalkalisalz mit aliphatischen Alkoholen wie Methanol, Ethanol, Isopropanol oder Isobutanol oder einer wäßrigen Lösung der Alkohole entfernt wird.

Bekannt sind ähnliche Verfahren, bei denen das verbleibende Polyetherpolyol aus dem Alkali- oder Erdalkalisalz mittels organischer Lösungsmittel ausgewaschen wird. Dadurch fällt ein pulverförmiges Alkali- oder Erdalkalisalz an, welches schlecht fließt und zur Brückenbildung oder zur Stauung bei der Druckluftförderung neigt. In Scherversuchen werden typische Fließindices (Definition: A.W. Jenike, Storage and Flow of Solids, Bulletin No. 123, Utah Engng. Exp. Station, Univ. of Utah, Salt Lake City, 1970) um 2 ermittelt. Diese Eigenschaften machen das Alkali- oder Erdalkalisalz ungeeignet für eine gravimetrische Förderung oder Förderung mittels Druckluft, wie sie in stationären Silos oder Silofahrzeugen gängige Praxis ist. Das erhaltene Salz ist damit nicht zur Wiederverwendung geeignet. Nachteilig sind auch hohe Restmengen an Lösungsmittel im anfallenden Alkali- oder Erdalkalisalz. Diese betragen üblicherweise 25 bis 200 ppm.

Es gibt bislang kein Verfahren, welches über den allgemein üblichen Filtrationsschritt im Herstellungsverfahren für Polyetherpolyole zu einem fließfähigen, reinen und damit leicht wiederverwertbaren Alkali- oder Erdalkalisalz führt. Es war daher Aufgabe der Erfindung, ein Verfahren zur Gewinnung von reinen, fließfähigen Alkali- oder Erdalkalisalzen aus den Salzrückständen der Polyetherpolyolproduktion bereitzustellen, und dadurch sowohl ökonomische als auch ökologische Vorteile zu erzielen, welche sich aus der Gewinnung eines verkaufsfähigen Produktes aus einem bisher als Rest- und Abfallstoff betrachteten Produktionsrückstand ergeben und geringe zusätzliche Investitionen erfordert, da das erfindungsgemäße Verfahren in bestehenden Filtrationsapparaturen durchgeführt werden kann.

Gegenstand der vorliegenden Erfindung ist ein Verfahren zur Gewinnung von reinen, fließfähigen Alkali- oder Erdalkalisalzen aus den bei der Polyetherpolyolherstellung durch Neutralisation des alkalischen Polyetherpolyol-Reaktionsgemisches mit anorganischen Säuren anfallenden Filterkuchen, dadurch gekennzeichnet, daß nacheinander folgende Verfahrensschritte durchgeführt werden:
a) die Filterkuchen werden mit einem organischen Lösungsmittel extrahiert oder gewaschen,
b) die extrahierten oder gewaschenen Filterkuchen werden in Wasser oder in einer gesättigten Alkali oder Erdalkalisalzlösung angelöst oder aufgelöst,
c) es wird eine Kühlkristallisation oder Verdampfungskristallisation durchgeführt und das Kristallisationsprodukt abgetrennt,
d) es erfolgt eine Trocknung des isolierten, kristallinen Alkali- oder Erdalkalisalzes.

Gemäß einer bevorzugten Ausführungsform des erfindungsgemäßen Verfahrens wird reines, fließfähiges Kaliumsulfat gewonnen

Erfindungsgemäß bevorzugt ist, daß im Verfahrensschritt a) organische Lösungsmittel der Formel 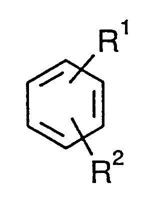 mit
R¹ = CH₃, C₂H₅, n-C₃H₇, iso-C₃H₇,
R² = H, CH₃, C₂H₅, n-C₃H₇, iso-C₃H₇
und/oder Alkohole und/oder Ether verwendet werden,
- im Verfahrensschritt a) als organisches Lösungsmittel Ethylbenzol und/oder Toluol und/oder Xylol verwendet wird,
- die Trocknung im Verfahrensschritt d) unter Vakuum erfolgt,
- die von den Alkali- oder Erdalkalisalzen nach dem Verfahrensschritt c) abgetrennte, gesättigte Alkali- oder Erdalkalisalzlösung bei nachfolgenden Verfahrenschritten b) wieder eingesetzt wird.

Die als Ausgangsmaterial für die Gewinnung von reinen, fließfähigen Alkali-oder Erdalkalisalzen eingesetzten Filterkuchen bestehen zu einem hohen Anteil aus Alkali- oder Erdalkalisalzen anorganischer Säuren wie z.B. Alkali- oder Erdalkalisulfaten, -chloriden, -phosphaten oder -carbonaten und stellen normalerweise Produktionsabfälle dar.

Als im Verfahrensschritt a) verwendbare organische Lösungsmittel kommen z.B. in Frage: Alkohole wie z.B. Methanol, Ethanol oder Isopropanol, Ether wie z.B. Diethylether oder Methyltertiärbutylether, substituierte aromatische Kohlenwasserstoffe wie z.B. Toluol, Xylol oder Ethylbenzol. Bevorzugt werden erfindungsgemäß Toluol, Xylol und/oder Ethylbenzol eingesetzt.

### Durchführung des erfindungsgemäßen Verfahrens

a) Im ersten Verfahrensschritt werden die Filterkuchen in einer Filterapparatur wie z.B. einer Nutsche mit organischen Lösungsmitteln gewaschen oder extrahiert und von Restmengen des Polyetherpolyols befreit. Das organische Lösungsmittel wird dabei so gewählt, daß es das Alkali- oder Erdalkalisalz nicht oder nur in Spuren löst. Zur vollständigen Entfernung anhaftenden Polyetherpolyols wird die Behandlung des Alkali- oder Erdalkalisalzes mit dem organischen Lösungsmittel gegebenenfalls mehrmals nacheinander durchgeführt, danach wird jeweils abfiltriert. Aus dem Filtrat kann durch Abdestillieren des organischen Lösungsmittels noch Polyetherpolyol gewonnen werden; das organische Lösungsmittel wird zurückgewonnen.
b) Im zweiten Verfahrensschritt wird der gereinigte Filterkuchen in Wasser oder einer gesättigten Alkali- oder Erdalkalisalzlösung auf- oder angelöst. Dieser Vorgang kann in derselben Filterapparatur durchgeführt werden. Während des An- oder Auflösevorganges wird gerührt und die Temperatur auf 70 bis 200°C, bevorzugt 100 bis 150°C, erhöht. Dies kann beispielsweise geschehen durch direktes Dampfeinleiten in die Lösung oder in den Heizmantel der Filterappatur.
c) Die Kristallisation der Alkali- oder Erdalkalisalze aus der Lösung wird durchgeführt entweder durch
   i) Abkühlen der heißen, gesättigten Alkali- oder Erdalkalisalzlösung z.B. bis auf 20 bis 35°C beispielsweise durch Wassereinleiten in den Kühlmantel der Filterappatur oder
   ii) Verdampfungskristallisation durch Eindampfen der heißen, gesättigten Lösung durch Anlegen von Vakuum. Nach entsprechendem Aufkonzentrieren tritt beim Abkühlen Kristallisation ein.
d) Das auskristallisierte Alkali- oder Erdalkalisalz wird abfiltriert und die abgekühlte, gesättigte Alkali- oder Erdalkalisalzlösung in einer Vorlage gesammelt. Eventuell enthaltene Restmengen an organischem Lösungsmittel können durch Phasentrennung abgeschieden werden; die abgekühlte, gesättigte Alkali- oder Erdalkalisalzlösung kann zur Aufarbeitung der nächsten Filterkuchencharge im Verfahrensschritt b) verwendet werden. Das nunmehr kristallisierte Alkali- oder Erdalkalisalz wird sodann in der Filterapparatur durch Aufheizen und unter Anlegen von Vakuum getrocknet nachdem es gegebenenfalls mit dem gleichen organischen Lösungsmittel wie im Verfahrensschritt a) wasserfrei gewaschen worden ist. Nach Abkühlen des Alkali- oder Erdalkalisalzes wird es aus der Apparatur ausgetragen.

Das erhaltene Produkt ist grob, kristallin und reiner, als das nach dem Stande der Technik anfallende Alkali- oder Erdalkalisalz. Es neigt nicht zur Brückenbildung oder zur Stauung bei der Druckluftförderung. In Scherversuchen werden Fließindices von über 12 ermittelt. Die größere Reinheit des Alkali- oder Erdalkalisalzes wird durch den gegenüber dem Stande der Technik auf ein zehntel reduziertem Gehalt an Lösungsmittel belegt, der sich auch in einem verringerten Geruch manifestiert. Das so gewonnene Alkali- oder Erdalkalisalz ist aufgrund seiner verbesserten Eigenschaften als Wertstoff anzusehen, der aus einem unverwertbaren Produktionsrückstand durch ein verbessertes Verfahren zugänglich gemacht wird. Die Verfahrensprodukte finden vielfältige Verwendung so beispielsweise auch als Additiv bei der Herstellung von Estrichen.

### Ausführungsbeispiel

270 kg Filterkuchen aus der Neutralisation eines KOH-alkalischen Polyetherpolyol-Reaktionsgemisches mit Schwefelsäure werden auf einer Nutsche mehrfach mit Ethylbenzol, insgesamt 3000 l, gerührt und gewaschen. Nach jedem Waschvorgang wird das Filtrat abfiltriert. Der verbleibende feste Rückstand, das rohe Kaliumsulfat, wird dann mit 1 690 l einer auf 30°C temperierten, gesättigten (13 kg/100 l Wasser) Kaliumsulfatlösung versetzt und unter Rühren durch Einleiten von Dampf in den Heiz- bzw. Kühlmantel der Nutsche auf 150°C aufgeheizt. Der rohe Salzkuchen löst sich auf und die Konzentration der Salzlösung erreicht einen Wert von 29 kg/100 l Wasser. Anschließend wird das Gemisch gekühlt durch Einleiten von Wasser von 22°C in den Heiz- bzw. Kühlmantel der Nutsche. Wenn eine Temperatur von 30°C erreicht ist, wird die gesättigte Kaliumsulfatlösung abfiltriert und für die nächste Salzcharge bei 30°C temperiert. Die geringfügige, auf der Salzlösung aufschwimmende organische Phase, besteht aus Ethylbenzol und kann leicht abgetrennt werden. Das noch wasserfeuchte, kristallisierte Kaliumsulfat wird, um anhaftende Feuchtigkeit zu entfernen, zweimal mit 300 l Ethylbenzol abgespült. Dann wird der Salzkuchen wie oben beschrieben aufgeheizt und durch Anlegen von Vakuum getrocknet. Nach erfolgter Trocknung wird auf 25°C abgekühlt und das kristalline Kaliumsulfat aus der Nutsche ausgetragen. Die Eigenschaften des gewonnenen Kaliumsulfats sind:

| | |
|---|---|
| Farbe: | sandfarben |
| Kristallgröße: | 0,5 bis 3 mm |
| Fließindex: | 12,3 |
| Restgehalt Etyhlbenzol: | 2,5 ppm. |

## Patentansprüche

1. Verfahren zur Gewinnung von reinen, fließfähigen Alkali- oder Erdalkalisalzen aus den bei der Polyetherpolyolherstellung durch Neutralisation des alkalischen Polyetherpolyol-Reaktionsgemisches mit anorganischen Säuren anfallenden Filterkuchen, dadurch gekennzeichnet, daß nacheinander folgende Verfahrensschritte durchgeführt werden:
a) die Filterkuchen werden mit einem organischen Lösungsmittel extrahiert oder gewaschen,
b) die extrahierten oder gewaschenen Filterkuchen werden in Wasser oder in einer gesättigten Alkali- oder Erdalkalisalzlösung angelöst oder aufgelöst,
c) es wird eine Kühlkristallisation oder Verdampfungskristallisation durchgeführt und das Kristallisationsprodukt abgetrennt,
d) es erfolgt eine Trocknung des isolierten, kristallinen Alkali- oder Erdalkalisalzes.

2. Verfahren gemäß Anspruch 1, dadurch gekennzeichnet, daß reines, fließfähiges Kaliumsulfat gewonnen wird.

3. Verfahren gemäß Anspruch 1, dadurch gekennzeichnet, daß im Verfahrensschritt a) organische Lösungsmittel der Formel 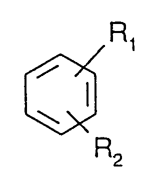 mit:
R₁ = CH₃, C₂H₅, n-C₃H₇, iso-C₃H₇
R₂ = H, CH₃, C₂H₅, n-C₃H₇, iso-C₃H₇
und/oder Alkohole und/oder Ether verwendet werden.

4. Verfahren gemäß den Ansprüchen 1 und 3, dadurch gekennzeichnet, daß im Verfahrensschritt a) als organisches Lösungsmittel Ethylbenzol und/oder Toluol und/oder Xylol verwendet wird.

5. Verfahren gemäß Anspruch 1, dadurch gekennzeichnet, daß die Trocknung im Verfahrensschritt d) unter Vakuum erfolgt.

6. Verfahren gemäß Anspruch 1, dadurch gekennzeichnet, daß die von den Alkali- oder Erdalkalisalzen nach dem Verfahrensschritt c) abgetrennte, gesättigte Alkali- oder Erdalkalisalzlösung bei nachfolgenden Verfahrensschritten b) wieder eingesetzt wird.

## Claims

1. A process for the production of pure, free-flowing alkali or alkaline earth salts from the filter cakes which are formed during polyether polyol production by the neutralisation of the alkaline polyether polyol reaction mixture with inorganic acids, characterised in that the following process steps are performed in succession:
a) the filter cakes are extracted or washed with an organic solvent,
b) the extracted or washed filter cakes are dissolved or decomposed in a saturated solution of an alkali or alkaline earth salt,
c) crystallisation by cooling or evaporative crystallisation is effected and the crystallisation product is separated,
d) drying is effected of the isolated, crystalline alkali or alkaline earth salt.

2. A process according to claim 1, characterised in that pure, free-flowing potassium sulphate is produced.

3. A process according to claim 1, characterised in that, in process step a), organic solvents of formula 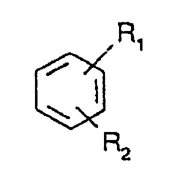 are used, where
R₁ = CH₃, C₂H₅, n-C₃H₇, iso-C₃H₇, and
R₂ = H, CH₃, C₂H₅, n-C₃H₇, iso-C₃H₇,
and/or alcohols and/or ethers are used.

4. A process according to claims 1 and 3, characterised in that ethylbensene and/or toluene and/or xylene are used as the organic solvent in process step a).

5. A process according to claim 1, characterised in that drying in process step d) is effected under vacuum.

6. A process according to claim 1, characterised in that the saturated solution of alkali or alkaline earth salt which is separated from the alkaii or alkaline earth salts in process step c) is reused in subsequent process steps b).

## Revendications

1. Procédé pour obtenir des sels alcalins ou alcalino-terreux purs, capables de s'écouler, à partir des gâteaux de filtration obtenus à la fabrication des polyétherpolyols par neutralisation à l'aide d'acides minéraux du mélange de réaction alcalin contenant les polyétherpolyols, caractérisé en ce qu'il comporte les stades opératoires successifs suivants :
a) on extrait ou on lave les gâteaux de filtration par un solvant organique,
b) on redissout en totalité ou en partie les gâteaux de filtration extraits ou lavés dans l'eau ou dans une solution saturée de sel alcalin ou alcalino-terreux,
c) on provoque la cristallisation par refroidissement ou par vaporisation et on sépare le produit cristallisé,
d) on sèche le sel alcalin ou alcalino-terreux cristallisé qu'on vient de séparer.

2. Procédé selon la revendication 1, caractérisé en ce que l'on obtient du sulfate de potassium pur et qui s'écoule bien.

3. Procédé selon la revendication 1, caractérisé en ce que, au stade opératoire a), on utilise des solvants organiques de formule : 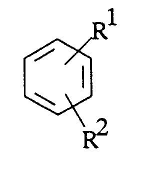 dans laquelle :
R¹ = CH₃, C₂H₅, n-C₃H₇, iso-C₃H₇,
R² = H, CH₃, C₂H₅, n-C₃H₇, iso-C₃H₇
et/ou des alcools et/ou des éthers,

4. Procédé selon les revendications 1 et 3, caractérisé en ce que, au stade opératoire a), on utilise en tant que solvant organique l'éthylbenzène et/ou le toluène et/ou le xylène,

5. Procédé selon la revendication 1, caractérisé en ce que, au stade opératoire d), le séchage est réalisé sous vide.

6. Procédé selon la revendication 1, caractérisé en ce que la solution saturée de sel alcalin ou alcalino-terreux séparée des sels alcalins ou alcalino-terreux après le stade opératoire c) est réutilisée dans le stade opératoire b) des opérations suivantes.
